# EUROPÄISCHE PATENTSCHRIFT

(11) **EP 2 483 651 B1**
(45) Veröffentlichungstag und Bekanntmachung des Hinweises auf die Patenterteilung: **08.11.2017**
(21) Anmeldenummer: 10757426.1
(22) Anmeldetag: 27.09.2010
(51) Int. Cl.: G01K 11/32

(54) **VORRICHTUNG UND VERFAHREN ZUR ORTSAUFGELÖSTEN TEMPERATURMESSUNG**
APPARATUS AND METHOD FOR SPATIALLY RESOLVED TEMPERATURE MEASUREMENT
DISPOSITIF ET PROCÉDÉ DE MESURE DE TEMPÉRATURE À RÉSOLUTION SPATIALE

(30) Priorität: 01.10.2009 DE 102009047990
(43) Veröffentlichungstag der Anmeldung: 08.08.2012
(73) Patentinhaber: LIOS Technology GmbH, 51063 Köln (DE)
(72) Erfinder: HILL, Wieland, 51519 Odenthal (DE)
(74) Vertreter: Basfeld, Rainer
(86) Internationale Anmeldenummer: PCT/EP2010/064268
(87) Internationale Veröffentlichungsnummer: WO 2011/039142

(56) Entgegenhaltungen:
- GB-A- 2 243 210
- US-B1- 6 285 806
- SOTO M A ET AL: "Performance improvement in Brillouin-based simultaneous strain and temperature sensors employing pulse coding in coherent detection schemes", OPTICAL FIBER COMMUNICATION - INCUDES POST DEADLINE PAPERS, 2009. OFC 2009. CONFERENCE ON, IEEE, PISCATAWAY, NJ, USA, 22. März 2009 (2009-03-22), Seiten 1-3, XP031467875, ISBN: 978-1-4244-2606-5
- WOSNIOK A ET AL: "Distributed Fibre Optic Sensor System for Temperature and Strain Monitoring Based on Brillouin Optical-Fibre Frequency-Domain Analysis", PROCEDIA CHEMISTRY, ELSEVIER, Bd. 1, Nr. 1, 1. September 2009 (2009-09-01), Seiten 397-400, XP026799566, ISSN: 1876-6196 [gefunden am 2009-09-01]

## Beschreibung

Die vorliegende Erfindung betrifft eine Vorrichtung zur ortsaufgelösten Temperaturmessung gemäß dem Oberbegriff des Anspruchs 1 und ein Verfahren zur ortsaufgelösten Temperaturmessung gemäß dem Oberbegriff des Anspruchs 6.

Faseroptische Temperaturmesssysteme (Distributed Temperature Sensing - DTS) können optische Effekte in Lichtleitfasern zur ortsaufgelösten Temperaturmessung nutzen. Beispielsweise kann der Effekt der Raman-Streuung genutzt werden. Hierbei wird die Strahlung einer schmalbandigen Quelle elektromagnetischer Strahlung (z.B. die eines Lasers) inelastisch im Fasermaterial gestreut. Das Verhältnis der Intensitäten der Streustrahlung mit kürzerer Wellenlänge als die Anregung (anti-Stokes Streustrahlung) und der Streustrahlung bei längerer Wellenlänge (Stokes-Streustrahlung) ist temperaturabhängig und kann zur Temperaturbestimmung verwendet werden. Durch Nutzung von Frequenz- (Optical Frequency-Domain Reflectometry - OFDR (EP0692705, EP0898151)) oder Pulstechniken (Optical Time-Domain Reflectometry - OTDR) kann die Temperatur entlang der Faser ortsaufgelöst bestimmt werden. Derartige Messsysteme können beispielsweise zur Brandüberwachung in Tunneln und Kanälen, zur Überwachung von Energiekabeln und Pipelines sowie bei der Öl- und Gasförderung eingesetzt werden.

Eine Vorrichtung und ein Verfahren der eingangs Art sind aus der GB 2 243 210 A1 bekannt. Bei der darin beschriebenen Vorrichtung wird ein von einem Laser ausgehender Laserstrahl von einem Strahlteiler in zwei Teilstrahlen aufgespalten. Der erste Teilstrahl wird von einem ersten Modulator moduliert und in eine Lichtleitfaser eingekoppelt.

Die aus der Lichtleitfaser zurück gestreuten Anteile des ersten Teilstrahls werden mit dem zweiten Teilstrahl gemischt und treffen zusammen mit diesen auf einen zweiten Modulator auf. Das aus dem zweiten Modulator austretende Licht wird zusammen mit dem Ausgangssignal eines Fabry-Perot-Spektrum-Analysators in einem photoleitenden 3-Wellen-Mischer weiterverarbeitet.

Eine weitere Vorrichtung und ein weiteres Verfahren zur ortsaufgelösten Temperaturmessung sind aus der US 6 285 806 B1 bekannt. Bei der darin beschriebenen Vorrichtung wird ein von einem Laser ausgehender Laserstrahl von einem Strahlteiler in zwei Teilstrahlen aufgespalten. Der erste Teilstrahl wird von einem Modulator moduliert und in eine Lichtleitfaser eingekoppelt. Die aus der Lichtleitfaser zurück gestreuten Anteile des ersten Teilstrahls werden mit dem zweiten Teilstrahl in einem Demodulator gemischt und demoduliert. Das Ausgangssignal des Demodulators wird in zwei Teile aufgespalten, die von zwei Signalumwandlern in elektrische Signale umgewandelt und einem Differenzverstärker zugeführt werden.

Eine weitere Vorrichtung und ein weiteres Verfahren zur ortsaufgelösten Temperaturmessung sind beispielsweise aus der EP 0 692 705 A1 bekannt. Ein Problem der ortsaufgelösten Temperaturmessung in Lichtleitfasern ist dabei die begrenzte Ortsauflösung entlang der Faser.

Bei Pulstechniken ist dies durch die Breite der Laserpulse und die Zeitauflösung der Nachweiselektronik bestimmt. Bei Frequenztechniken wird die Ortsauflösung durch die maximale Frequenz limitiert. Bekannte OTDR-DTS-Aufbauten erreichen Ortsauflösungen im Bereich von 1 m.

In den bisher bekannten OFDR-DTS-Anordnungen wird die optische Ausgangsleistung eines Halbleiterlaser durch Modulation des Laserstroms moduliert. Die Detektion erfolgt durch eine Demodulation bzw. Mischung der vom optischen Empfänger kommenden elektrischen Signale. Dabei kann eine homodyne Detektion (Demodulation mit der Laserfrequenz) oder auch heterodyne Detektion (Mischung mit einer gegenüber dem Laser verschobenen Frequenz) eingesetzt werden. Die heterodyne Detektion hat den Vorteil, dass die nachfolgenden Verstärker schmalbandig auf einer festen Frequenz betrieben werden können.

Sowohl die elektrische Lasermodulation als auch die elektrische Demodulation sind bezüglich der Frequenz begrenzt.

Der Laser muß mit vergleichsweise hohen Strömen (ca. 1A) moduliert werden. Durch die Induktivitäten in den Zuleitungen und auch den Aufbau des Lasers sind die erforderlichen Modulationstiefen nur bis zu Frequenzen in der Größenordnung 100 MHz erreichbar.

Beim Nachweis des modulierten Lichts werden üblicherweise Photodioden mit Transimpedanzverstärkern eingesetzt. Mit der erforderlichen Gleichstromkopplung und den notwendigen Verstärkungen sind Frequenzen im Bereich 250 MHz realisierbar.

Mit elektrischer Modulation des Lasers und elektrischer Demodulation der empfangenen Signale sind Ortsauflösungen von etwa 0,5m erreichbar.

Eine Alternative zur verteilten Temperaturmessung in normalen Lichtleitern ist die Verwendung von Fibre Bragg Gratings (FBG). Derartige FBG können in kleinen Abständen in optische Fasern eingebracht werden und ermöglichen so Temperaturmessungen mit hoher Ortsauflösung. Allerdings ist die Technik sehr aufwendig (jedes Gitter muß individuell kodiert werden) und ermöglicht auch nur punktuelle Messungen.

Für zahlreiche industrielle Anwendungen und Anwendungen in der Umwelt sind verteilte Temperaturmessungen mit Ortsauflösungen von 0,1 m oder besser erforderlich. Diese Ortsauflösungen lassen sich mit den bekannten Anordnungen nicht erreichen.

Das der vorliegenden Erfindung zugrunde liegende Problem ist die Schaffung einer Vorrichtung und eines Verfahrens der eingangs genannten Arten, mit denen eine hohe Ortsauflösung erzielbar sind.

Dies wird erfindungsgemäß hinsichtlich der Vorrichtung durch eine Vorrichtung der eingangs genannten Art mit den kennzeichnenden Merkmalen des Anspruchs 1 sowie hinsichtlich des Verfahrens durch ein Verfahren der eingangs genannten Art mit den kennzeichnenden Merkmalen des Anspruchs 6 erreicht. Die Unteransprüche betreffen bevorzugte Ausgestaltungen der Erfindung.

Gemäß Anspruch 1 ist vorgesehen, dass die Demodulatormittel Sensormittel und Mittel zur Erzeugung eines zusätzlichen Lichtsignals umfassen, das zusammen mit den aus der Lichtleitfaser ausgekoppelten Anteilen des Lichts von den Sensormitteln detektiert werden kann, wobei die von den Filter- und Spektralteilermitteln ausgehenden Anteile des Lichts direkt auf die Sensormittel auftreffen und wobei das zusätzliche, modulierte Lichtsignal in zwei Teile aufgespalten wird, die ebenfalls auf die Sensormittel auftreffen.

Gegenstand der Erfindung ist daher der Einsatz optischer Techniken zur Demodulation und/oder Modulation in einem DTS-Gerät. Derartige Techniken erreichen Frequenzen im GHz-Bereich und ermöglichen so die gewünschten Ortsauflösungen von 0,1 m oder besser.

Beispielsweise können als Photodiode ausgebildete Sensormittel nicht nur mit dem optischen Signal aus der Lichtleitfaser, sondern auch gleichzeitig mit einem zweiten modulierten Lichtsignal bestrahlt werden. Beide Signale können in der Photodiode gemischt werden. Je nachdem, ob das zweite optische Signal mit der gleichen oder einer verschobenen Frequenz moduliert ist, entsteht ein homodynes oder heterodynes Mischsignal.

Auch auf der Sendeseite lassen sich optische Techniken einsetzen, um den Nachweis höherer Frequenzen zu ermöglichen.

Bei der Verwendung eines optischen Modulators kann der Laser mit Gleichstrom betrieben werden. Die kontinuierliche Laserstrahlung wird mit einem optischen Modulator mit den erforderlichen Frequenzen moduliert. Solch ein Modulator kann beispielsweise ein Mach-Zehnder-Modulator sein. In diesem Modulator wird das Laserlicht auf zwei Interferometerarme aufgeteilt und die optische Weglänge in einem Arm unter Nutzung elektrooptischer Effekte moduliert. Nach dem Zusammenführen beider Lichtanteile entsteht durch Interferenz ein moduliertes Laserlicht. Der Vorteil dieser Anordnung gegenüber der direkten Modulation des Lasers besteht darin, dass die elektrooptische Modulation elektrisch sehr leistungsarm ist und sich deshalb deutlich höhere Frequenzen realisieren lassen.

Ein erfindungsgemäßes hoch ortsauflösendes OFDR-DTS-Gerät kann im Allgemeinen folgende wesentlichen Komponenten enthalten: Laser, Koppeloptiken, Filter, Lichtleiter, optische Detektor(en) wie bei bisher bekannten Aufbauten sowie mindestens einen optischen Demodulator und/oder Modulator.

Gemäß Anspruch 6 ist vorgesehen, dass für das Demodulieren ein zusätzliches Lichtsignal erzeugt und moduliert wird, das zusammen mit den aus der Lichtleitfaser ausgekoppelten Anteilen des Lichts von Sensormitteln detektiert wird. Dabei kann insbesondere das Verfahren ein OFDR- oder ein OTDR-Verfahren sein.

In einem erfindungsgemäßen OFDR-Verfahren wird eine kontinuierliche Modulation der Lichtintensität eingesetzt. Die Signale werden dann bezüglich Amplituden und Phasen für verschiedene Modulations frequenzen analysiert. In der Regel wird das Signal mit einer (weiteren) Frequenz gemischt und die entstehende Differenzfrequenz wird weiter verstärkt und ausgewertet.

Dabei besteht die Möglichkeit, dass im Rahmen des OFDR-Verfahrens die Intensität des Lichts mit festen beziehungsweise diskreten Frequenzen moduliert wird. Es werden beispielsweise Vielfache einer Grundfrequenz benutzt: 0*f, 1*f, 2*f, 3*f, ..., i*f, ..., m*f. Vorzugsweise ist m=2**n, also z.B. 256, 512, 1024, 2048, .... Bei jeder Frequenz werden Amplitude und Phase des aus der Lichtleitfaser ausgekoppelten Signals registriert. Diese sogenannten Frequenzdaten werden mit einer inversen (schnellen) Fouriertransformation verarbeitet und damit in den Zeitbereich übertragen. Diese Zeitdaten ermöglichen eine Zuordnung der Entfernung. Typisch ist f= 1 bis 100 kHz und m*f= 1 bis 1000 MHz. Zur Vereinfachung des Nachweises wird das Signal bei i*f mit einer zweiten Frequenz i*f - f_{z} gemischt, um ein leichter zu filterndes und zu verstärkendes Signal bei der Zwischenfrequenz f_{z} zu erhalten (Heterodyne Detektion).

Alternativ dazu besteht die Möglichkeit, dass im Rahmen des OFDR-Verfahrens die Intensität des Lichts mit einer sich zeitlich verändernden Frequenz moduliert wird. Beispielsweise kann die Intensität des Lichts mit einer linear ansteigenden Frequenz moduliert werden. Das aus der Lichtleitfaser ausgekoppelte Signal wird beispielsweise mit der gleichen Frequenz gemischt. Dann ergibt sich ein Spektrum von Differenzfrequenzen, das durch die Laufzeit der Signale bestimmt ist.

Bei beiden vorgenannten Vorgehensweisen der Frequenzmodulation der Intensität ist erfindungsgemäß ein optischer Demodulator und/oder Modulator einsetzbar.

Die erfindungsgemäß verwendete Laserlichtquelle muss nicht unbedingt Licht im sichtbaren Spektralbereich emittieren, sondern kann insbesondere auch langwelligere Strahlung im nahen Infrarotbereich emittieren.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen
- Fig. 1: eine schematische Darstellung einer Vorrichtung zur ortsaufgelösten Temperaturmessung;
- Fig. 2: eine schematische Darstellung einer ersten Ausführungsform einer erfindungsgemäßen Vorrichtung;

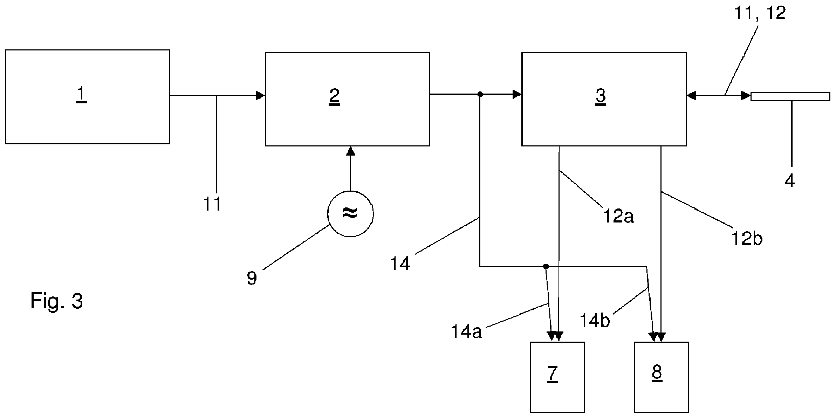

- Fig. 3: eine schematische Darstellung einer zweiten Ausführungsform einer erfindungsgemäßen Vorrichtung.

In den Figuren sind gleiche oder funktional gleiche Teile mit gleichen Bezugszeichen versehen.

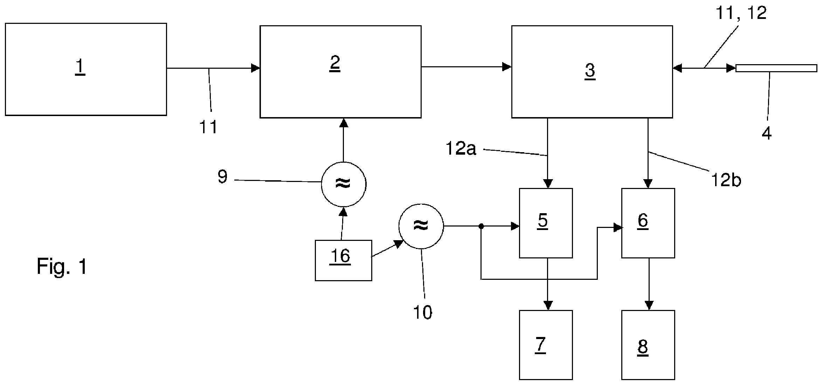

Die in Fig. 1 abgebildete Vorrichtung umfasst eine Laserlichtquelle 1, optische Modulatormittel 2, Filter- und Spektralteilermittel 3, eine Lichtleitfaser 4, optische Demodulatormittel 5, 6 und Sensormittel 7, 8.

Weiterhin sind Ansteuermittel 9, 10 für die Modulatormittel 2 und die Demodulatormittel 5, 6 vorgesehen. Weiterhin kann die Vorrichtung nicht abgebildete Koppelmittel für die Ein- und Auskopplung des von der Laserlichtquelle erzeugten Lichts 11 in die Lichtleitfaser 4 und aus der Lichtleitfaser 4 umfassen. Zusätzlich kann die Vorrichtung nicht abgebildete Auswertemittel umfassen, die in an sich bekannter Weise aus den von den Sensormitteln 7, 8 detektierten Lichtanteilen die Temperatur in der Lichtleitfaser 4 ortsaufgelöst bestimmen können.

Das von der Laserlichtquelle 1 ausgehende Licht 11 wird von den Modulatormitteln 2 mit einer von den Ansteuermitteln 9 vorgegebenen Frequenz moduliert. Dazu können die Modulatormittel 2 beispielsweise als Mach-Zehnder-Modulator ausgebildet sein. Ein derartiger Mach-Zehnder-Modulator weist zwei Interferometerarme auf, auf die das Licht 11 aufgespalten werden kann, wobei in einem der Arme das Licht 11 durch einen elektrooptischen Modulator moduliert, insbesondere frequenzmoduliert werden kann.

Das derart modulierte Licht 11 kann über die nur schematisch dargestellten Filter- und Spektralteilermittel 3 und nicht dargestellte Einkoppelmittel wie beispielsweise Linsen in die Lichtleitfaser 4 eingekoppelt werden. Die Lichtleitfaser 4 ist ebenfalls lediglich schematisch dargestellt und kann eine Länge von mehreren hundert Metern oder mehr aufweisen.

Die in der Lichtleitfaser 4 zurück gestreuten Anteile 12 des von der Laserlichtquelle erzeugten Lichts 11 werden nach Auskopplung aus der Lichtleitfaser 4 von den Filter- und Spektralteilermitteln 3 gefiltert. Von den Filter- und Spektralteilermitteln 3 gehen beispielsweise zwei Anteile 12a, 12b des Lichts aus, die der Stokes- und der anti-Stokes-Streustrahlung entsprechen.

Ein jeder der Anteile 12a, 12b verläuft durch optische Demodulatormittel 5, 6 und wird von diesen mit einer von den Ansteuermitteln 10 vorgegebenen Frequenz moduliert. Dazu können auch die Demodulatormittel 5, 6 beispielsweise als Mach-Zehnder-Modulator ausgebildet sein.

Dabei können die von den Ansteuermitteln 9, 10 vorgegebenen Frequenzen gleich oder verschieden voneinander sein. Die Ansteuermittel 9, 10 können in geeigneter Weise synchronisiert werden, beispielsweise durch einen gemeinsamen Takt- oder Zeitgeber 16.

Die aus den Demodulatormitteln 5, 6 austretenden Anteile 12a, 12b des Lichts werden von den Sensormitteln 7, 8, die beispielsweise als Photodioden ausgebildet sind, detektiert. Von den nicht dargestellten Auswertemitteln können die detektierten Signale so ausgewertet werden, dass die Temperatur in der Lichtleitfaser 4 ortsaufgelöst bestimmt wird.

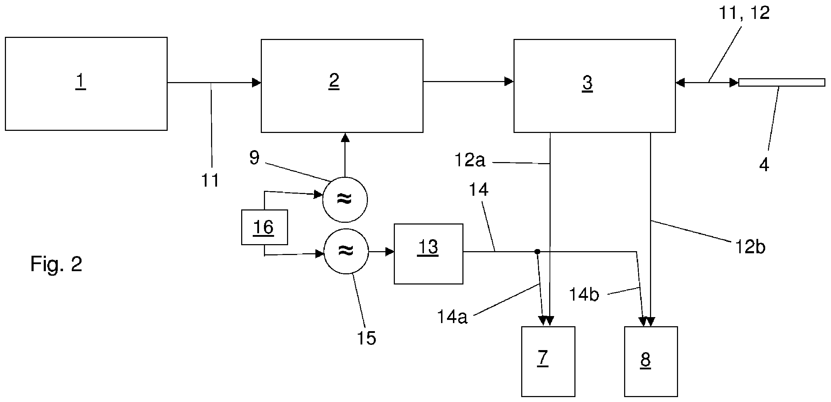

Die in Fig. 2 abgebildete erste Ausführungsform einer erfindungsgemäßen Vorrichtung unterscheidet sich von der in Fig. 1 abgebildeten Vorrichtung lediglich durch die anders gestalten Demodulatormittel. Anstelle zweier beispielsweise als Mach-Zehnder-Modulator ausgebildeter Demodulatormittel 5, 6 umfasst die erste Ausführungsform Mittel 13 zur Erzeugung eines zusätzlichen Lichtsignals 14, die von Ansteuermitteln 15 derart angesteuert werden, dass das zusätzliche 14 moduliert, insbesondere frequenzmoduliert ist. Die Mittel 13 können beispielsweise eine zusätzliche Laserlichtquelle sein. Alternativ könnten die Mittel 13 einen zweiten Mach-Zehnder-Modulator umfassen, auf den ein Teil des Lichts 11 der Laserlichtquelle 1 geführt und moduliert wird.

Die von den Filter- und Spektralteilermitteln 3 ausgehenden Anteile 12a, 12b des Lichts treffen bei der ersten Ausführungsform direkt auf die Sensormittel 7, 8. Gleichzeitig wird das zusätzliche, modulierte Lichtsignal 14 in zwei Teile 14a, 14b aufgespalten, die ebenfalls auf die Sensormittel 7, 8 auftreffen.

In einem jeden der Sensormittel 7, 8 kann jeweils der entsprechende aus der Lichtfaser 4 zurückgestreute Anteil 12a, 12b mit dem Teil 14a, 14b des zusätzliche Lichtsignal 14 gemischt werden. Auch auf diese Weise kann eine optische Demodulation der rückgestreuten Anteile 12a, 12b erreicht werden.

Ähnlich wie bei der Vorrichtung gemäß Fig. 1 können auch bei der ersten Ausführungsform die von den Ansteuermitteln 9, 15 vorgegebenen Frequenzen gleich oder verschieden voneinander sein.

Die zweite Ausführungsform ähnelt der ersten Ausführungsform, wobei allerdings bei der zweiten Ausführungsform die Mittel zur Erzeugung des zusätzlichen Lichtsignals 14 ein nicht abgebildeter Strahlteiler sein können. Dieser nicht abgebildete Strahlteiler zweigt einen Teil des bereits modulierten Lichts 11 vor dem Eintritt in die Filter- und Spektralteilermitteln 3 ab. Auf diese Weise lässt sich mit sehr einfachen Mitteln ein zusätzliches moduliertes 14 erzeugen. Allerdings entspricht hier die Modulationsfrequenz automatisch der Modulationsfrequenz der zurückgestreuten Anteile 12a, 12b, so dass eine homodyne Demodulation beziehungsweise Detektion vorliegt.

Alternativ kann ein Teil des noch nicht modulierten Lichts 11 der Laserlichtquelle 1 abgezweigt und auf einen zweiten Modulator geführt werden. Auf diese Weise könnte auch eine heterodyne Demodulation beziehungsweise Detektion durchgeführt werden.

## Patentansprüche

1. Vorrichtung zur ortsaufgelösten Temperaturmessung, umfassend
- mindestens eine Lichtleitfaser (4) für die ortsaufgelöste Temperaturmessung,
- mindestens eine Laserlichtquelle (1), deren Licht (11) in die Lichtleitfaser (4) eingekoppelt werden kann, wobei die in der Lichtleitfaser (4) zurück gestreuten Anteile (12, 12a, 12b) des von der Laserlichtquelle (1) erzeugten Lichts (11) aus der Lichtleitfaser (4) ausgekoppelt und detektiert werden können,
- optische Modulatormittel (2), die eine Modulation des in die Lichtleitfaser (4) einzukoppelnden Lichts (11) ermöglichen,
- Filter- und Spektralteilermittel (3) sowie Einkoppelmittel, über die das modulierte Licht (11) in die Lichtleitfaser (4) eingekoppelt werden kann,
- optische Demodulatormittel, die eine Demodulation der aus der Lichtleitfaser (4) ausgekoppelten Anteile (12, 12a, 12b) des Lichts (11) ermöglichen,
**dadurch gekennzeichnet, dass** die Demodulatormittel Sensormittel (7, 8) und Mittel zur Erzeugung eines zusätzlichen Lichtsignals (14) umfassen, das zusammen mit den aus der Lichtleitfaser (4) ausgekoppelten Anteilen (12, 12a, 12b) des Lichts (11) von den Sensormitteln (7, 8) detektiert werden kann, wobei die von den Filter- und Spektralteilermitteln (3) ausgehenden Anteile (12a, 12b) des Lichts (11) direkt auf die Sensormittel (7, 8) auftreffen und wobei das zusätzliche, modulierte Lichtsignal (14) in zwei Teile aufgespalten wird, die ebenfalls auf die Sensormittel (7, 8) auftreffen.

2. Vorrichtung nach Anspruch 1, **dadurch gekennzeichnet, dass** die Sensormittel (7, 8) eine Photodiode umfassen oder als Photodiode ausgebildet sind.

3. Vorrichtung nach einem der Ansprüche 1 oder 2, **dadurch gekennzeichnet, dass** die optischen Modulatormittel (2) einen Mach-Zehnder-Modulator umfassen oder als Mach-Zehnder-Modulator ausgebildet sind.

4. Vorrichtung nach Anspruch 3, **dadurch gekennzeichnet, dass** der Mach-Zehnder-Modulator zwei Interferometerarme aufweist, auf die das Licht (11) aufgespalten werden kann, wobei in einem der Arme das Licht (11) durch einen elektrooptischen Modulator moduliert werden kann.

5. Vorrichtung nach einem der Ansprüche 1 bis 4, **dadurch gekennzeichnet, dass** die Vorrichtung ein OFDR-DTS-Gerät oder ein OTDR-DTS-Gerät ist.

6. Verfahren zur ortsaufgelösten Temperaturmessung, wobei das Verfahren insbesondere mit einer Vorrichtung nach einem der Ansprüche 1 bis 5 durchgeführt wird, umfassend folgende Verfahrensschritte:
- Erzeugen von Licht (11), insbesondere mit einer Laserlichtquelle (1);
- Modulieren des Lichts (11) mit optischen Mitteln;
- Einkoppeln des Lichts (11) in eine Lichtleitfaser (4);
- Auskoppeln der in der Lichtleitfaser (4) zurück gestreuten Anteile (12) des eingekoppelten Lichts (11) aus der Lichtleitfaser (4);
- Demodulieren der ausgekoppelten Anteile (12, 12a, 12b) des Lichts (11) mit optischen Mitteln;
**dadurch gekennzeichnet, dass** für das Demodulieren ein zusätzliches (14) erzeugt und moduliert wird, das zusammen mit den aus der Lichtleitfaser (4) ausgekoppelten Anteilen (12, 12a, 12b) des Lichts (11) von Sensormitteln (7, 8) detektiert wird.

7. Verfahren nach Anspruch 6, **dadurch gekennzeichnet, dass** das Modulieren vermittels eines Mach-Zehnder-Modulators erfolgt.

8. Verfahren nach einem der Ansprüche 6 oder 7, **dadurch gekennzeichnet, dass** das Verfahren ein OFDR- oder ein OTDR-Verfahren ist.

9. Verfahren nach Anspruch **8, dadurch gekennzeichnet, dass** im Rahmen des OFDR-Verfahrens die Intensität des Lichts (11) mit festen beziehungsweise diskreten Frequenzen moduliert wird.

10. Verfahren nach Anspruch 8, **dadurch gekennzeichnet, dass** im Rahmen des OFDR-Verfahrens die Intensität des Lichts (11) mit einer sich zeitlich verändernden Frequenz moduliert wird.

## Claims

1. Device for position-resolved temperature measurement, comprising
- at least one optical fibre (4) for the position-resolved temperature measurement,
- at least one laser light source (1), the light (11) of which can be injected into the optical fibre (4), whereas the components (12, 12a, 12b) of the light (11) generated by the laser light source (1), which are scattered back in the optical fibre (4), can be extracted from the optical fibre (4) and be detected.
- optical modulator means (2), which allow modulation of the light (11) to be injected into the optical fibre (4),
- filtering and spectral splitting means (3), as well as injection means, via which the modulated light (11) can be injected into the optical fibre (4),
- optical demodulator means, which allow demodulation of the components (12, 12a, 12b) of the light (11) which are extracted from the optical fibre (4),
**characterised in that** the demodulator means comprise sensor means (7, 8) and means for generating an additional light signal (14), which can be detected by the sensor means (7, 8) together with the components (12, 12a, 12b) of the light (11) which are extracted from the optical fibre (4), the components (12a, 12b) of the light (11) which emerge from the filtering and spectral splitting means (3) striking the sensor means (7, 8) directly, and the additional modulated light signal (14) being split into two parts, which likewise strike the sensor means (7, 8).

2. Device according to claim 1, **characterised in that** the sensor means (7, 8) comprise a photodiode or are configured as a photodiode.

3. Device according to one of claims 1 or 2, **characterised in that** the optical modulator means (2) comprise a Mach-Zehnder modulator or are configured as a Mach-Zehnder modulator.

4. Device according to claim 3, **characterised in that** the Mach-Zehnder modulator comprises two interferometer branches, onto which the light (11) can be split, it being possible to modulate the light (11) by an electro-optical modulator in one of the branches.

5. Device according to one of claims 1 to 4, **characterised in that** the device is an OFDR-DTS instrument or an OTDR-DTS instrument.

6. Method for position-resolved temperature measurement, the method being carried out in particular with a device according to one of claims 1 to 5, comprising the following method steps:
- generating light (11), in particular with a laser light source (1);
- modulating the light (11) with optical means;
- injecting the light (11) into an optical fibre (4);
- extracting from the optical fibre (4) the components (12) of the injected light (11) which are scattered back in the optical fibre (4);
- demodulating the extracted components (12, 12a, 12b) of the light (11) by optical means;
**characterised in that,** for the demodulation, an additional light signal (14) is generated and modulated, this additional light signal being detected by the sensor means (7, 8) together with the components (12, 12a, 12b) of the light (11) which are extracted from the optical fibre (4).

7. Method according to claim 6, **characterised in that** the modulation is carried out by means of a Mach-Zehnder modulator.

8. Method according to one of claims 6 or 7, **characterised in that** the method is an OFDR method or an OTDR method.

9. Method according to claim 8, **characterised in that,** in the scope of an OFDR method, the intensity of the light (11) is modulated with fixed, or discrete, frequencies.

10. Method according to claim 8, **characterised in that,** in the scope of an OTDR method, the intensity of the light (11) is modulated with a frequency varying as a function of time.

## Revendications

1. Dispositif de mesure de température à résolution spatiale, comprenant
- au moins une fibre optique (4) pour la mesure de température à résolution spatiale,
- au moins une source de lumière laser (1), dont la lumière (11) peut être injectée dans la fibre optique (4), dans lequel les fractions rétrodiffusées (12, 12a, 12b) dans la fibre optique (4) de la lumière (11) générée par la source de lumière laser (1) peuvent être extraites de la fibre optique (4) et détectées,
- des moyens de modulation optiques (2), qui permettent une modulation de la lumière (11) à injecter dans la fibre optique (4),
- des moyens de filtrage et de division spectrale (3) ainsi que des moyens d'injection, par le biais desquels la lumière modulée (11) peut être injectée dans la fibre optique (4),
- des moyens de démodulation optiques, qui permettent une démodulation des fractions (12, 12a, 12b) extraites de la fibre optique (4) de la lumière (11),
**caractérisé en ce que** les moyens de démodulation comprennent des moyens de détection (7, 8) et des moyens de génération d'un signal de lumière supplémentaire (14), qui peut être détecté conjointement avec les fractions (12, 12a, 12b) extraites de la fibre optique (4) de la lumière (11) par les moyens de détection (7, 8), dans lequel les fractions (12a, 12b) partant des moyens de filtrage et de division spectrale (3) de la lumière (11) peuvent frapper directement les moyens de détection (7, 8), et dans lequel le signal de lumière modulé supplémentaire (14) est scindé en deux parties, qui frappent également les moyens de détection (7, 8).

2. Dispositif selon la revendication 1, **caractérisé en ce que** les moyens de détection (7, 8) comprennent une photodiode ou sont réalisés en tant que photodiode.

3. Dispositif selon l'une quelconque des revendications 1 ou 2, **caractérisé en ce que** les moyens de modulation optiques (2) comprennent un modulateur Mach Zehnder ou sont réalisés en tant que modulateur Mach Zehnder.

4. Dispositif selon la revendication 3, **caractérisé en ce que** le modulateur Mach Zehnder présente deux bras d'interféromètre, sur lesquels la lumière (11) peut être scindée, dans lequel la lumière (11) peut être modulée par un modulateur électro-optique dans un des bras.

5. Dispositif selon l'une quelconque des revendications 1 à 4, **caractérisé en ce que** le dispositif est un appareil OFDR DTS ou un appareil OTDR DTS.

6. Procédé de mesure de température à résolution spatiale, dans lequel le procédé est réalisé en particulier avec un dispositif selon l'une quelconque des revendications 1 à 5, comprenant les étapes de procédé suivantes :
- génération de lumière (11), en particulier avec une source de lumière laser (1) ;
- modulation de la lumière (11) avec des moyens optiques ;
- injection de la lumière (11) dans une fibre optique (4) ;
- extraction de la fraction (12) rétrodiffusée dans la fibre optique (4) de la lumière injectée (11) à partir de la fibre optique (4) ;
- démodulation des fractions (12, 12a, 12b) extraites de la lumière (11) avec des moyens optiques ;
**caractérisé en ce que** pour la démodulation, un signal de lumière supplémentaire (14) est généré et modulé, qui est détecté conjointement avec les fractions (12, 12a, 12b) extraites de la fibre optique (4) de la lumière (11) par des moyens de détection (7, 8).

7. Procédé selon la revendication 6, **caractérisé en ce que** la modulation se fait au moyen d'un modulateur Mach Zehnder.

8. Procédé selon l'une quelconque des revendications 6 ou 7, **caractérisé en ce que** le procédé est un procédé OFDR ou un procédé OTDR.

9. Procédé selon la revendication 8, **caractérisé en ce que** dans le cadre du procédé OFDR, l'intensité de la lumière (11) est modulée avec des fréquences fixes respectivement discrètes.

10. Procédé selon la revendication 8, **caractérisé en ce que** dans le cadre du procédé OFDR, l'intensité de la lumière (11) est modulée avec une fréquence variable dans le temps.
